(19) Europäisches Patentamt
European Patent Office
Office européen des brevets

(11) Veröffentlichungsnummer : **0 062 257**
**B1**

(12) **EUROPÄISCHE PATENTSCHRIFT**

(45) Veröffentlichungstag der Patentschrift : **25.07.84**

(51) Int. Cl.$^3$ : **C 09 B 49/10**, D 06 P 1/30

(21) Anmeldenummer : **82102550.9**

(22) Anmeldetag : **26.03.82**

# (54) Schwefelfarbstoffe, Verfahren zu ihrer Herstellung und ihre Verwendung.

(30) Priorität : **07.04.81 DE 3114033**

(43) Veröffentlichungstag der Anmeldung : **13.10.82 Patentblatt 82/41**

(45) Bekanntmachung des Hinweises auf die Patenterteilung : **25.07.84 Patentblatt 84/30**

(84) Benannte Vertragsstaaten : **CH DE FR GB IT LI**

(56) Entgegenhaltungen :
**DE-B- 1 038 211**
**DE-C- 247 733**
**DE-C- 261 651**
**DE-C- 679 985**
**Die Akte enthält technische Angaben, die nach dem Eingang der Anmeldung eingereicht wurden und die nicht in dieser Patentschrift enthalten sind.**

(73) Patentinhaber : **CASSELLA Aktiengesellschaft**
**Hanauer Landstrasse 526**
**D-6000 Frankfurt am Main 61 (DE)**

(72) Erfinder : **Cornelius, Dieter, Dr.**
**Grundstrasse 9**
**D-6100 Darmstadt (DE)**

(74) Vertreter : **Urbach, Hans-Georg, Dr. et al**
**Hanauer Landstrasse 526**
**D-6000 Frankfurt am Main 61 (DE)**

EP 0 062 257 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Schwefelfarbstoffe, die aus 4-Hydroxydiphenylaminen durch Schwefeln in einem zweistufigen Verfahren herstellbar sind, ein Verfahren zu ihrer Herstellung und ihre Verwendung zum Färben von Cellulose, cellulosehaltigen Materialien und von Polyamid.

Es ist bekannt, daß man 4-Oxydiphenylamin mit Alkalipolysulfid oder Schwefel in einen Schwefelfarbstoff überführen kann (deutsche Patentschrift 261 651). Pro Mol 4-Oxydiphenylamin werden dabei 5,78 Mole Schwefel eingesetzt. Anstelle von 4-Oxydiphenylamin kann man bei der Schwefelung auch das entsprechende Thiazin einsetzen (deutsche Patentschrift 266 568).

Es ist auch ein Verfahren zur Herstellung von Schwefelfarbstoffen bekannt (deutsche Patentschrift 679 985), bei dem 4-Oxydiarylamine, z. B. 4'-Methyl-4-oxydiphenylamin, in einer ersten Stufe mit Schwefelnatrium und Schwefel oder mit Schwefel allein bei höherer Temperatur bis zur Bildung einer Thiazinverbindung behandelt und danach in einer zweiten Stufe das erhaltene Produkt durch Erhitzen in aliphatischen oder cyclischen Alkoholen und, falls die Ausgangsverbindung mit Schwefel allein verschmolzen wurde, unter Zusatz von Alkalisulfid in Schwefelfarbstoffe überführt wird. In der ersten Stufe wird dabei mit einem beträchtlichen Schwefelüberschuß gearbeitet, z. B. wird das 4'-Methyl-4-oxydiphenylamin in erster Stufe mit 300 Mol% Schwefel umgesetzt. Die erhaltenen Farbstoffe färben Cellulose in rotbraunen, violetten bis schwarzen Farbtönen.

Nach einem anderen bekannten Verfahren (deutsche Auslegeschrift 1 038 211) werden 4-Oxydiphenylamine dadurch in Schwefelfarbstoffe überführt, daß man zunächst 1 Teil mit 1,5 bis 3 Teilen Alkalipolysulfid $Me_2S_x$, bzw. einer Mischung von Alkalisulfid und soviel Schwefel, daß $\times$ dem Wert 5 bis 7 entspricht, in Gegenwart von über 100 °C siedenden wasserlöslichen, organischen Lösungsmitteln und Wasser schmilzt, den erhaltenen Rohfarbstoff isoliert und in Abwesenheit von anorganischen Schwefelverbindungen in alkalischer Dispersion oxydiert. Bei diesem Verfahren werden Farbstoffe erhalten, die Cellulose mit nach rot verschobenen Farbtönen färben. Die Notwendigkeit, die Rohfarbstoffe zu isolieren, verteuert dieses Verfahren.

Es wurde nun gefunden, daß ausgehend von 4-Hydroxy-diphenylaminen der Formel I

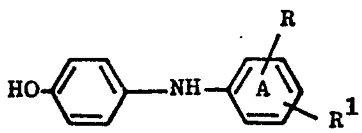

(I)

worin R und $R^1$ unabhängig voneinander Wasserstoff oder Alkyl mit 1 bis 4 C-Atomen bedeuten und der Kern A mindestens eine freie ortho-Stellung besitzt, neue Schwefelfarbstoffe in einem zweistufigen Verfahren hergestellt werden können, die Cellulose in gelb-braunen bis braunen Farbtönen färben und die gegenüber den Farbstoffen der DE-C 679 985 auf Cellulose wesentlich höhere Farbausbeuten, eine bessere Chlorechtheit und eine bessere Löslichkeit in wäßrigen Alkalisulfidlösungen bei sehr guter Lichtechtheit und guten Naßechtheiten aufweisen. Die erfindungsgemäßen Schwefelfarbstoffe sind herstellbar in einer ersten Stufe durch Einwirkung von Schwefel auf 4-Hydroxydiphenylamin der Formel I

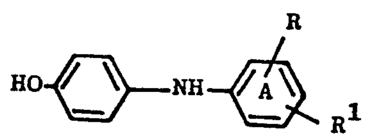

(I)

worin R und $R^1$ Wasserstoff oder Alkyl mit 1 bis 4 C-Atomen bedeuten und der Kern A zur Iminogruppe mindestens eine freie ortho-Stellung besitzt, bei erhöhter Temperatur unter Bildung einer Thiazinverbindung, die in einer zweiten Stufe in einem wasserlöslichen Lösungsmittel bei erhöhter Temperatur zu einem Schwefelfarbstoff geschwefelt wird.

Die erfindungsgemäßen Schwefelfarbstoffe sind gekennzeichnet durch ein Molverhältnis zwischen der Verbindung I und Schwefel in der ersten Stufe von 1 : (2 bis 2,4), vorzugsweise 1 : (2,1 bis 2,3). Diejenigen Schwefelfarbstoffe sind bevorzugt, die aus Verbindungen der Formel I herstellbar sind, bei denen $R^1$ Wasserstoff bedeutet und bei denen insbesondere R in para-Stellung steht.

Nach dem erfindungsgemäßen Verfahren wird eine Verbindung der Formel I, vorzugsweise eine solche Verbindung fer Formel I, bei der $R^1$ Wasserstoff bedeutet, insbesondere eine solche, bei der R in para-Stellung steht, in erster Stufe mit Schwefel im Molverhältnis 1 : (2 bis 2,4), vorzugsweise 1 : (2,1 bis 2,3), in eine Thiazinverbindung überführt und diese in einer zweiten Stufe in einem wasserlöslichen Lösungsmittel bei erhöhter Temperatur zu einem Schwefelfarbstoff geschwefelt. Die Reaktionstemperaturen der ersten Stufe betragen dabei 160 bis 190 °C, wobei das Gemisch aus der Verbindung I und Schwefel solange erhitzt wird, bis sich das entsprechende 3-Hydroxy-phenothiazin gebildet hat. Bei dem empfehlenswerten Zusatz eines geeigneten Katalysators, wie z. B. Jod, betragen die Reaktionszeiten in

der ersten Stufe ca. 0,5 bis 5, vorzugsweise 2 bis 3 Stunden. Es kann auch eine Gemisch verschiedener Verbindungen der Formel I eingesetzt werden.

Da die in der ersten Stufe gebildeten 3-Hydroxy-phenothiazine beim Isolieren schon durch die Berührung mit Luftleicht zu Phenothiazonen, oxydiert werden, die beim Schwefeln Farbstoffe mit geringerem Ziehvermögen auf Cellulose liefern, ist es zweckmäßig, das in der ersten Stufe gebildete Zwischenprodukt nicht zu isolieren, sondern sofort in der zweiten Stufe weiter zu schwefeln.

Die Schwefelung in der zweiten Stufe wird bei Temperaturen von 130 bis 150 °C, vorzugsweise 135 bis 140 °C, in einem wasserlöslichen organischen Lösungsmittel durchgeführt. Geeignete wasserlösliche organische Lösungsmittel, welche Rückflußtemperaturen von 130 bis 150 °C zu erreichen gestatten, sind z. B. cyclische Alkohole, wie Cyclohexanol, Glykole oder insbesondere Glykolether, die z. B. der Formel II

$$R^2O\left[CH_2-CH_2-O\right]_n-H \qquad (II)$$

entsprechen, worin $R^2$ Wasserstoff, Methyl, Ethyl, Propyl und n eine Zahl von 1 bis 4 bedeuten. Beispiele für geeignete Glykole und Glykolether sind : Ethylenglykol, Diethylenglykol, Tetraethylenglykol, die Monomethyl- oder Monoethylether des Ethylenglykols, Diethylenglykols, Triethylenglykols oder Tetraethylenglykols. Aus Gemische von wasserlöslichen Lösungsmitteln können verwendet werden, z. B. ein « Ethylpolyglykol » genanntes technisches Lösungsmittelgemisch, das zu ca. 70 % aus dem Ethyl-diethylenglykol, 20 % aus Ethyl-triethylenglykol und 10 % aus Ethyl-tetraethylenglykol besteht.

Zur Schwefelung in der zweiten Stufe wird ein Alkalipolysulfid $Me_2S_m$, wobei Me ein Alkalimetall, insbesondere Natrium, und m eine Zahl von 3 bis 4,5 bedeutet, verwendet. Pro Mol Ausgangsprodukt der Formel I werden in der zweiten Stufe 1 bis 1,5, vorzugsweise 1,1 bis 1,2, Mole $Me_2S_m$ verwendet. Anstelle des Alkalipolysulfids kann auch eine Mischung eines Alkalisulfids, insbesondere Natriumsulfid, und soviel Schwefel, gegebenenfalls auch im Gemisch mit einem Polysulfid, verwendet werden, daß die Zusammensetzung der Mischung der Formel $Me_2S_m$ entspricht. Es ist zweckmäßig, die Schwefelung in der zweiten Stufe in Gegenwart einer hydrotropen Verbindung, z. B. des Natriumsalzes der Xylolsulfonsäure, vorzunehmen. Außerdem ist es zweckmäßig, dem Ansatz zu Beginn der zweiten Stufe pro Mol Ausgangsprodukt der Formel I 0,1 bis 1,0, vorzugsweise 0,5 bis 0,75 Mol Alkalihydroxid, insbesondere Natriumhydroxid, zuzufügen. Die Reaktionszeiten bei der Schwefelung in der zweiten Stude betragen 5 bis 48 Stunden, in der Regel 20 bis 36 Stunden.

Der erhaltene Reaktionsansatz stellt im Prinzip bereits einen gebrauchsfertigen flüssigen Farbstoff der. In der Regel wird der erhaltene Reaktionsansatz nur noch mit Wasser auf Typstärke verdünnt und zur Verbesserung der Lagerstabilität mit einem Reduktionsmittel, im allgemeinen mit Natriumsulfhydrat, versetzt.

Aus dem erhaltenen Reaktionsansatz kann der Farbstoff auch in fester Form isoliert werden. Hierzu wird die bei der Schwefelung in der zweiten Stufe erhaltene Schmelze mit Wasser verdünnt und mit Luft ausgeblasen. Der sich dabei abscheidende Farbstoff wird abfiltriert und die so erhaltene Farbstoffpaste getrocknet. Das Pulver kann in üblicher Weise, z. B. durch Mischen mit Natriumsulfat, zu einem Farbstoff eingestellt werden. Die erhaltene Farbstoffpaste kann aber auch durch Vermahlen mit Dispergiermitteln, z. B. mit Ligninsulfonaten, in eine fein disperse Form überführt werden, die sich nach dem Trocknen wieder leicht in Wasser dispergieren läßt. Die Farbstoffpaste kann darüberhinaus auch mit Sulfiten, z. B. mit einem Gemisch aus Natriumsulfit und Natriumbisulfit in einen wasserlösslichen Farbstoff übergeführt werden.

Die erfindungsgemäßen Schwefelfarbstoffe lassen sich durch Reduktionsmittel, wie sie zur Reduktion von Schwefelfarbstoffen üblich sind, sehr leicht reduzieren. Sie werden vorzugsweise zum Färben von pflanzlichen Fasern (Cellulose) nach den üblichen, für das Färben mit Schwefel- oder Schwefelküpenfarbstoffen bekannten Verfahren eingesetzt. Hierzu werden sie mit Reduktionsmitteln, vorzugsweise Natriumdithionit, Natriumsulfid oder Natriumhydrogensulfid, möglicherweise aber auch mit Natriumformaldehyd-sulfoxylat, Glukose oder organischen Mercaptoverbindungen, wie z. B. Thioglycerin oder Thioglycolsäure, in die lösliche Leucoform überführt, die auf die Fasern aufzieht. Die in flüssiger, gebrauchsfertiger Form vorliegenden Farbstoffe enthalten die lösliche Leucoform und Reduktionsmittel und können auch ohne weiteren Zusatz von Reduktionsmitteln zum Färben der genannten Fasern verwendet werden.

Nach dem Aufziehen der Farbstoffe auf die Fasern wird die Leucoform der erfindungsgemäßen Schwefelfarbstoffe in üblicher Weise, beispielsweise durch « Verhängen » der Färbungen an der Luft oder Oxidation mit Oxidationsmitteln, wie beispielsweise Wasserstoffperoxid, Alkalibichromat, Alkalichlorit oder Alkalijodat, wieder in die unlösliche Form des Schwefelfarbstoffs überführt. Die erfindungsgemäß herstellbaren Schwefelfarbstoffe färben die Cellulose in vollen gelbbraunen, braunen und rotbraunen Tönen bei sehr guter Licht- und guten Naßechtheiten, insbesondere guter Chlorechtheit.

Den aus der deutschen Patentschrift 679 985 und der deutschen Auslegeschrift 1 038 211 bekannten Farbstoffen sind die erfindungsgemäßen Farbstoffe, z. B. im Ziehvermögen auf Cellulose, und in der Löslichkeit in wäßriger Alkalisulfidlösung überlegen. Auch Polyamid läßt sich mit den erfindungsgemäßen Schwefelfarbstoffen in üblicher Weise färben. Man erhält darauf je nach Reduktionsmittel und eingesetzter Farbstoffmenge blaustichige braune Farbtöne.

In den nachfolgenden Beispielen sind Prozente, wenn nichts anderes angegeben ist, Gewichtsprozente.

Beispiel 1

Ein Gemisch aus 185 g (1 Mol) 4-Hydroxydiphenylamin, 70,4 g (2,2 Mol) Schwefel und 0,5 g Jod wird 1 1/2 Stunden auf 180 °C erhitzt. Anschließend werden zu der noch heißen Schmelze 185 g Diethylenglykol-monoethylether, 25 g (0,625 Mol) Natriumhydroxid (in Form einer ca. 30 %igen wäßrigen Lösung), 74 g p-xylosulfosaures Natrium, 150 g 60 %iges technisches Dinatriumsulfid und 98,5 g Schwefel zugefügt. Im offenen Gefäß wird die Mischung unter Entweichen von Wasser erhitzt, bis die Reaktionsmasse eine Temperatur von 138 bis 140 °C erreicht hat. Dann wird 24 Stunden bei dieser Temperatur am Rückfluß erhitzt. Nach dem Abkühlen und Verdünnen mit Wasser und wäßriger Natriumsulfhydrat-Lösung werden 1 850 g einer wäßrigen Lösung eines färbefertigen Farbstoffs erhalten, der Cellulose in satten gelbstichig braunen Tönen mit sehr guten Echtheiten färbt und der im Temperaturbereich zwischen – 10° und 50 °C mindestens 1 Jahr lagerstabil ist.

Beispiel 2

Ein Gemisch aus 199 g (1 Mol) 4'-Methyl-4-hydroxy-diphenylamin, 73,6 g (2,3 Mol) Schwefel und 0,4 g Jod wird 1 Stunde auf 160 °C 1 Stunde auf 170 °C und 1 Stunde auf 180 °C erhitzt. Anschließend werden zu der noch heißen Schmelze 200 g « Ethylpolyglykol » (technisches Lösungsmittelgemisch, das zu ca. 70 % aus dem Ethyl-diethylenglykol, ca. 20 % aus Ethyl-triethylenglykol und ca. 10 % aus Ethyl-tetraethylenglykol besteht) und 20 g (0,5 Mol) Natriumhydroxid (in Form einer ca. 30 %igen wäßrigen Lösung) zugefügt. Diese Mischung wird zu einer Natriumpolysulfidlösung gegeben, die durch Erhitzen von 74 g p-xylolsulfosaures Natrium, 156 g 60 %iges techniches Dinatriumsulfid und 96 g Schwefel in 111 ccm Wasser auf 90 bis 95 °C erhalten wurde. Die Mischung wird unter Abdampfen von Wasser solange erhitzt, bis die Reaktionsmasse eine Temperatur von 135 bis 137 °C erreicht hat. Dann wird 36 Stunden bei dieser Temperatur am Rückfluß erhitzt. Nach dem Abkühlen und Verdünnen mit Wasser und wäßriger Natriumsulfhydratlösung werden 1 850 g einer wäßrigen Lösung eines färbefertigen Farbstoffs erhalten, der Cellulose in satten rotstichig braunen Tönen mit sehr guten Echtheiten färbt und der im Temperaturbereich zwischen – 10° und 50 °C mindestens 1 Jahr lagerstabil ist. Nach den obigen Beispielen lassen sich auch die in der nachfolgenden Tabelle angegebenen 4-Hydroxy-diphenylamine zu neuen Schwefelfarbstoffen umsetzen, welche Cellulose in den angegebenen Farbtönen färben.

| Ausgangsverbindung der Formel I | Farbton des neuen Schwefel farbstoffs auf Cellulose |
|---|---|
| 4-Hydroxy-2'-methyl-diphenylamin | gelbstichiges Braun |
| 4-Hydroxy-3'-methyl-diphenylamin | rotstichiges Braun |
| 4-Hydroxy-4'-ethyl-diphenylamin | rotstichiges Braun |
| 4-Hydroxy-4'-propyl-diphenylamin | rotstichiges Braun |
| 4-Hydroxy-4'-butyl-diphenylamin | rotstichiges Braun |
| 4-Hydroxy-2',4'-dimethyl-diphenylamin | gelbstichiges Braun |
| 4-Hydroxy-2',5'-dimethyl-diphenylamin | gelbstichiges Braun |
| 4-Hydroxy-3',4'-dimethyl-diphenylamin | gelbstichiges Braun |

**Ansprüche**

1. Schwefelfarbstoffe, herstellbar in einer ersten Stufe durch Einwirkung von Schwefel auf 4-Hydroxy-diphenylamin der Formel I

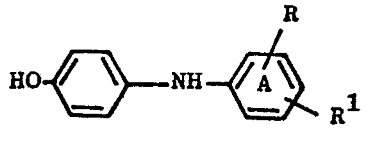

(I)

worin R und $R^1$ Wasserstoff oder Alkyl mit 1 bis 4 C-Atomen bedeuten und der Kern A zur Iminogruppe mindestens eine freie ortho-Stellung besitzt, bei erhöhter Temperatur unter Bildung einer Thiazinverbindung, die in einer zweiten Stufe in einem wasserlöslichen Lösungsmittel bei erhöhter Temperatur zu einem Schwefelfarbstoff geschwefelt wird, gekennzeichnet durch ein Molverhältnis zwischen der Verbindung I und Schwefel in der ersten Stufe von 1 : (2 bis 2,4).

2. Schwefelfarbstoff nach Anspruch 1, gekennzeichnet durch ein Molverhältnis zwischen der Verbindung der Formel I und Schwefel von 1 : (2,1 bis 2,3).

3. Schwefelfarbstoff nach den Ansprüchen 1 bis 2, dadurch gekennzeichnet, daß $R^1$ = Wasserstoff bedeutet und R in der Verbindung I in para-Stellung steht.

4. Schwefelfarbstoff nach den Ansprüchen 1 bis 2, dadurch gekennzeichnet, daß $R^1$ und $R^2$ Wasserstoff bedeuten.

5. Verfahren zur Herstellung von Schwefelfarbstoffen wobei in einer ersten Stufe 4-Hydroxydiphenylamine der Formel I

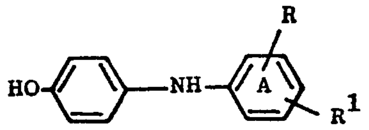

(I)

worin R und $R^1$ Wasserstoff oder Alkyl mit 1 bis 4 C-Atomen bedeuten und der Kern A zur Iminogruppe mindestens eine freie ortho-Stellung besitzt, mit Schwefel bei erhöhter Temperatur in Thiazinverbindungen überführt wird, die in einer zweiten Stude in einem wasserlöslichen Lösungsmittel bei erhöhter Temperatur zu Schwefelfarbstoffen geschwefelt werden, dadurch gekennzeichnet, daß in der ersten Stufe das Molverhältnis zwischen den Verbindungen der Formel I und Schwefel 1 : (2 bis 2,4) beträgt.

6. Verfahren nach Anspruch 5, dadurch gekennzeichnet, daß das Molverhältnis in der ersten Stufe 1 : (2,1 bis 2,3) beträgt.

7. Verfahren nach den Ansprüchen 5 oder 6, dadurch gekennzeichnet, daß das in der ersten Stufe erhaltene Produkt in der zweiten Stufe mit einem Alkalipolysulfid $Me_2S_m$, worin Me ein Alkalimetall und m eine Zahl von 3 bis 4,5 bedeutet, und/oder einem Gemisch aus Alkalisulfid, insbesondere Natriumsulfid und soviel Schwefel, daß die Zusammensetzung der Formel $Me_2S_m$ entspricht bei Temperaturen von 130 bis 150, vorzugsweise 135 bis 140 °C, geschwefelt wird, wobei pro Mol Ausgangsverbindung der Formel I 1 bis 1,5 vorzugsweise 1,1 bis 1,2 Mole $Me_2S_m$ zur Anwendung kommen.

8. Verfahren nach den Ansprüchen 5 bis 7, dadurch gekennzeichnet, daß die Reaktionstemperatur in der ersten Stufe 160 bis 190 °C beträgt.

9. Verfahren nach den Ansprüchen 5 bis 8, dadurch gekennzeichnet, daß das in der ersten Stufe gebildete Produkt sofort ohne Isolierung in der zweiten Stufe geschwefelt wird.

10. Verfahren nach den Ansprüchen 5 bis 9, dadurch gekennzeichnet, daß pro Mol Ausgangsverbindung der Formel I in der zweiten Stufe 0,1 bis 1,0 Mol, vorzugsweise 0,5 bis 0,75 Mol Alkalihydroxid, insbesondere Natriumhydroxid, zugefügt wird.

11. Verwendung der Farbstoffe der Ansprüche 1 bis 4 zum Färben von Cellulose, cellulosehaltigen Materialien oder Polyamid.

**Claims**

1. Sulphur dyestuffs which can be prepared in a first stage by the action of sulphur on a 4-hydroxydiphenylamine of the formula I

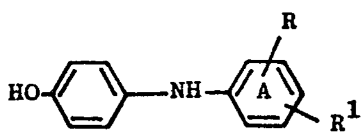

(I)

wherein R and $R^1$ denote hydrogen or alkyl having 1 to 4 C atoms and the nucleus A has at least one free orthoposition in relation to the imino group, at an elevated temperature, with the formation of a thiazine compound which is sulphurised in a second stage in a water-soluble solvent at an elevated temperature to give a sulphur dyestuff, characterised in that the molar ratio between the compound I and sulphur in the first stage is 1 : (2 to 2.4).

2. Sulphur dyestuff according to Claim 1, characterised by a molar ratio between the compound of the formula I and sulphur of 1 : (2.1 to 2.3).

3. Sulphur dyestuff according to Claims 1 to 2, characterised in that $R^1$ denotes hydrogen and R is in the paraposition in the compound I.

4. Sulphur dyestuff according to Claims 1 to 2, characterised in that $R^1$ and $R^2$ denote hydrogen.

5. Process for the preparation of sulphur dyestuffs, wherein, in a first stage, 4-hydroxy-diphenylamines of the formula I

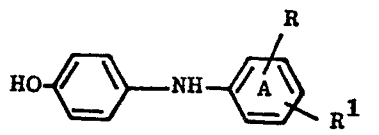

(I)

wherein R and $R^1$ denote hydrogen or alkyl having 1 to 4 C atoms and the nucleus A has at least one free orthoposition in relation to the imino group, are converted, by means of sulphur at an elevated temperature, into thiazine compounds which are sulphurised in a second stage in a water-soluble solvent at an elevated temperature to give sulphur dyestuffs, characterised in that the molar ratio between the compounds of the formula I and sulphur in the first stage is 1 : (2 to 2.4).

6. Process according to Claim 5, characterised in that the molar ratio in the first stage is 1 : (2.1 to 2.3).

7. Process according to Claim 5 or 6, characterised in that the product obtained in the first stage is sulphurised, at temperatures of 130 to 150, preferably 135 to 140 °C, in the second stage by means of an alkali metal polysulphide $Me_2S_m$ wherein Me denotes an alkali metal and m denotes a number from 3 to 4.5, and/or a mixture of an alkali metal sulphide, in particular sodium sulphide, and sufficient sulphur for the composition to correspond to the formula $Me_2S_m$, 1 to 1.5, preferably 1.1 to 1.2, mols of $Me_2S_m$ being used per mol of starting compound of the formula I.

8. Process according to Claims 5 to 7, characterised in that the reaction temperature in the first stage is 160 to 190 °C.

9. Process according to Claims 5 to 8, characterised in that the product formed in the first stage is sulphurised immediately, without being isolated, in the second stage.

10. Process according to Claims 5 to 9, characterised in that 0.1 to 1.0 mol, preferably 0.5 to 0.75 mol, of an alkali metal hydroxide, in particular sodium hydroxide, is added per mol of starting compound of the formula I in the second stage.

11. Use of the dyestuffs of Claims 1 to 4 for dyeing cellulose, cellulose-containing materials or polyamide.

**Revendications**

1. Colorants au soufre préparables par l'action à chaud, dans une première étape, du soufre sur une 4-hydroxydiphénylamine de formule I

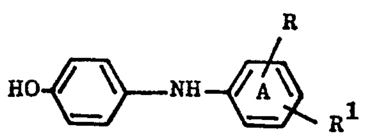

(I)

(dans laquelle R et $R^1$ représentent chacun, indépendamment l'un de l'autre, l'hydrogène ou un alkyle en $C_1$-$C_4$ et le cycle A comporte au moins une position ortho libre par rapport au groupe imino), avec formation d'un composé thiazinique que l'on soumet, dans une seconde étape, à une sulfuration à chaud dans un solvant hydrosoluble, pour obtenir un colorant au soufre, caractérisés par un rapport molaire entre le composé I et le soufre dans la première étape compris entre 1 : 2 et 1 : 2,4.

2. Colorant au soufre selon la revendication 1, caractérisé par un rapport molaire entre le composé I et le soufre de 1 : (2,1 à 2,3).

3. Colorant au soufre selon la revendication 1 ou 2, caractérisé en ce que dans le composé I $R^1$ est l'hydrogène et R $R^1$ est l'hydrogène et R occupe la position para.

4. Colorant au soufre selon la revendication 1 ou 2, caractérisé en ce que R et $R^1$ sont tous deux l'hydrogène dans le composé I.

5. Procédé de préparation de colorants au soufre dans lequel, dans une première étape, on transforme des 4-hydroxydiphénylamines de formule I

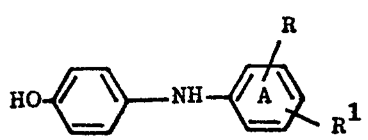

(I)

(dans laquelle R et $R^1$ représentent chacun l'hydrogène ou un alkyle en $C_1$-$C_4$ et le cycle A comporte au moins une position ortho libre par rapport au groupe imino), avec du soufre à chaud, en composés thiaziniques, que l'on soumet dans une seconde étape à une sulfuration à chaud dans un solvant hydrosoluble pour former le colorant au soufre, procédé caractérisé en ce que dans la première étape le rapport molaire entre le composé de formule I et le soufre est compris entre 1 : 2 et 1 : 2,4.

6. Procédé selon la revendication 5, caractérisé en ce que le rapport molaire entre le composé I et le soufre dans la première étape est de 1 : (2,1 à 2,3).

7. Procédé selon la revendication 5 ou 6, caractérisé en ce que l'on soumet dans la seconde étape le produit résultant de la première étape à la sulfuration avec un polysulfure alcalin $Me_2S_m$, Me désignant un métal alcalin et m un nombre de 3 à 4,5, et/ou avec un mélange d'un sulfure alcalin, en particulier le sulfure de sodium, et une quantité de soufre telle que la composition du mélange corresponde à la formule $Me_2S_m$, à des températures de 130 à 150 °C, de préférence de 135 à 140 °C, avec, par mole du composé de départ de formule I, 1 à 1,5 mole, de préférence 1,1 à 1,2 mole, de $Me_2S_m$.

8. Procédé selon l'une quelconque des revendications 5 à 7, caractérisé en ce que la température de réaction dans la première étape est comprise entre 160 et 190 °C.

9. Procédé selon l'une quelconque des revendications 5 à 8, caractérisé en ce que le produit de la première étape est soumis aussitôt à la sulfuration de la seconde étape, sans avoir été isolé.

10. Procédé selon l'une quelconque des revendications 5 à 9, caractérisé en ce que l'on ajoute dans la seconde étape, par mole du composé de formule I, 0,1 à 1,0 mole, de préférence 0,5 à 0,75 mole, d'un hydroxyde alcalin, en particulier l'hydroxyde de sodium.

11. Utilisation des colorants selon l'une quelconque des revendications 1 à 4, pour la teinture de cellulose, de matières contenant de la cellulose ou de polyamides.